Europäisches Patentamt

**European Patent Office**

**Office européen des brevets**

(11) Publication number: **0 076 613**
**B1**

## EUROPEAN PATENT SPECIFICATION

(45) Date of publication of patent specification: **14.01.87**

(51) Int. Cl.⁴: **G 01 N 25/08,** G 01 N 25/60

(21) Application number: **82305070.3**

(22) Date of filing: **24.09.82**

(54) **Methods of determining the difference between the temperature and saturation temperature of a heated, pressurized liquid.**

(30) Priority: **02.10.81 DE 3139231**

(43) Date of publication of application:
**13.04.83 Bulletin 83/15**

(45) Publication of the grant of the patent:
**14.01.87 Bulletin 87/03**

(84) Designated Contracting States:
**CH FR GB IT LI**

(56) References cited:
**DE-A-1 798 227**
**FR-A-2 167 905**
**JAPANESE JOURNAL OF APPLIED PHYSICS,
vol. 15, no. 6, June 1976, pages 1037-1044, Y.
SUYAMA et al.: "A determination of vapor
pressure-temperature relation of oxygen based
on latent heat measurements at normal boiling
point"
INDUSTRIAL LABORATORY, vol. 46, no. 8,
August 1980, pages 801-804, Plenum
Publishing Corporation, New York, US, L.M.
PVALOVA et al.: "Method of investigating
vapor pressure from the boiling points of
mixtures"**

(73) Proprietor: **BROWN BOVERI REAKTOR GmbH
Dudenstrasse 44
D-6800 Mannheim 1 (DE)**

(72) Inventor: **Day, Bobby L.
Haydnstrasse 22
D-6909 Walldorf (DE)**

(74) Representative: **Cotter, Ivan John et al
D. YOUNG & CO. 10 Staple Inn
London WC1V 7RD (GB)**

Courier Press, Leamington Spa, England.

# Description

This invention relates to methods of determining the difference between the temperature of a heated, pressurised liquid flowing in a closed system and its saturation temperature.

Saturation is reached in such liquids under specific pressure and temperature conditions. There are many examples of applications where it is highly desirable to have precise information concerning the saturation temperature and the difference from the saturation temperature for the pressurised, heated flowing liquid. One such application is the primary cooling system of a pressurised water nuclear reactor installation (particularly when problems occur), which has a pressure of about 16 MPa and a temperature of about 300°C. If temperature indicators operative over a range of about 150°C to 360°C and pressure indicators operative over a range of about 1 MPa to 17.5 MPa must be used, as in this example, it is difficult to determine pressure and temperature data precisely because of these wide ranges or bandwidths. That is, a typical pressure transmitter exhibits an error of about plus or minus 1% of its range, so that a pressure transmitter having a range of 0 to 17 MPa has an expected error of at least around 0.17 MPa over its entire normal operating range.

The difference between the saturation temperature and actual temperature of the liquid becomes especially important when that difference is relatively small, i.e. when near-accident conditions prevail. If saturation temperature is reached the liquid will boil easily, thereby reducing its ability to conduct heat from heating elements, such as fuel rods. Under such conditions, the accuracy of measurement of temperature and pressure deteriorates substantially. If, for example, a temperature measurement error of 5% to 7% is achieved over a broad range under normal operating conditions, an error of 12% to 15% will probably obtain under near accident conditions, i.e. when the temperature of the liquid approaches saturation.

It is generally known to establish the difference between the temperature and the saturation temperature of a liquid in the following manner. The pressure of the liquid is measured and is converted into the pertinent saturation temperature electronically (e.g. digitally) on the basis of a precalculated or otherwise known saturation curve. The temperature of the liquid is then measured and the differential between the calculated saturation temperature and the measured actual temperature of the liquid is taken.

Because of the large ranges or bandwidths of the measuring devices and the combination of the pressure and temperature measurement methods with one another, the measurement errors are additive, so that no reliable indication of the temperature difference from the saturation temperature is possible. Under near-accident conditions, the much greater measurement errors further reduce the meaningfulness and usefulness of the computed temperature difference from saturation.

It is therefore apparent that a substantial need exists for a method of more accurately determining the difference between the temperature of a heated pressurised liquid flowing in a closed system and its saturation temperature.

According to this invention there is provided a method of determining the difference between the temperature of a heated, pressurised liquid flowing in a closed system and its saturation temperature, the method being characterised by:

measuring the temperature of the liquid;

determining in a manner known *per se* the saturation pressure associated with the measured temperature;

adding to the saturation pressure the value of the pressure difference between the saturation pressure and the actual pressure, the pressure difference being determined by known means, to determine the actual pressure;

determining the saturation temperature for the liquid corresponding to the actual pressure in a manner known *per se*; and

subtracting the measured temperature from the determined saturation temperature to obtain the difference between the actual temperature of the liquid and its saturation temperature.

With the proposed combination of measurement steps, no direct addition of individual errors takes place. Any inaccuracy in the temperature measurement has little effect on the calculated difference from the saturation temperature because the relevant portion of the saturation curve has a nearly constant slope, i.e. the saturation curve is nearly linear. The inaccuracy from the pressure difference measurement is substantially smaller than a pressure measurement would be, since it has a smaller bandwidth than a pressure measurement of the liquid.

The invention will now be further described, by way of illustrative and non-limiting example, with reference to the accompanying drawings, in which:

Figure 1 illustrates a known method of determining the difference between the temperature of a heated, presurised liquid flowing in a closed system and its saturation temperature;

Figure 2 illustrates such a method embodying the present invention;

Figure 3 illustrates how measurement errors are minimised by the method embodying the present invention; and

Figure 4 illustrates the magnitude of measurement error in the method embodying the present invention.

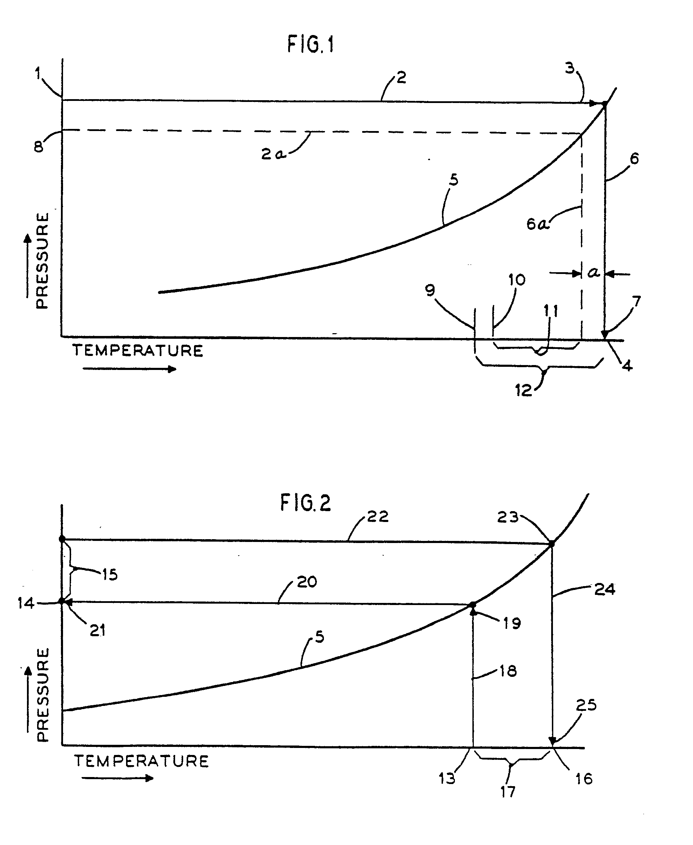

A known method of determining the difference between the temperature of a heated, pressurised liquid flowing in a closed system and its saturation temperature, and the additivity of errors occurring in the method, will now be described with reference to Figure 1. A pressure measurement of the liquid to be monitored produces a pressure value 1. The associated saturation temperature 4 is determined from the pressure value 1, as shown by a line 2 and an arrow 3. The known saturation curve 5 for the liquid is used for this purpose, by drawing a line 6 in the direction of an arrow 7 from its intersection with the line 2. If any inaccuracy occurs in the pressure measurement, which leads, for example to a pressure value 8, this produces an inaccuracy in the calculated saturation temperature 4, as illustrated by lines 2a, 6a and represented by an error dimension "a". Direct measurement of the temperature of the liquid may produce the correct temperature value, for example 10, or an incorrect temperature value, for example 9, in another case. The inaccuracies in the pressure and temperature measurements are additive and lead to a figure for the difference between the actual temperature and the saturation temperature which can have the value 11 or the value 12. In practice, with the wide bandwidths or ranges of the temperature and pressure indicators mentioned initially, in unfavourable cases this means inaccuracies in the region of 25 deg. C in the saturation temperature.

Figure 2 shows a method embodying the present invention for more precisely determining the temperature difference from the saturation temperature. This method comprises the following steps.

A. The temperature of the liquid is measured to establish a temperature value 13, and the associated saturation pressure 14 is derived from the temperature value 13 by using the saturation curve 5. This step is symbolised by a line 18 with an arrow 19 and by a line 20 with an arrow 21.

B. To the saturation pressure value 14 there is added the value of the pressure difference 15 between the liquid pressure and the associated saturation pressure. The pressure difference 15, i.e. the differential pressure to saturation, can be determined or measured independently by means well known in the art, in particular a relative pressure device.

C. Using the saturation curve 5, the saturation temperature 16 corresponding to the sum of the pressure values 14 and 15 is found. Lines 22 and 24 with arrows 23 and 25 illustrate this step.

D. The difference between this saturation temperature 16 and the measured temperature 13 of the liquid represents in a known way the temperature difference 17 from the saturation temperature 16.

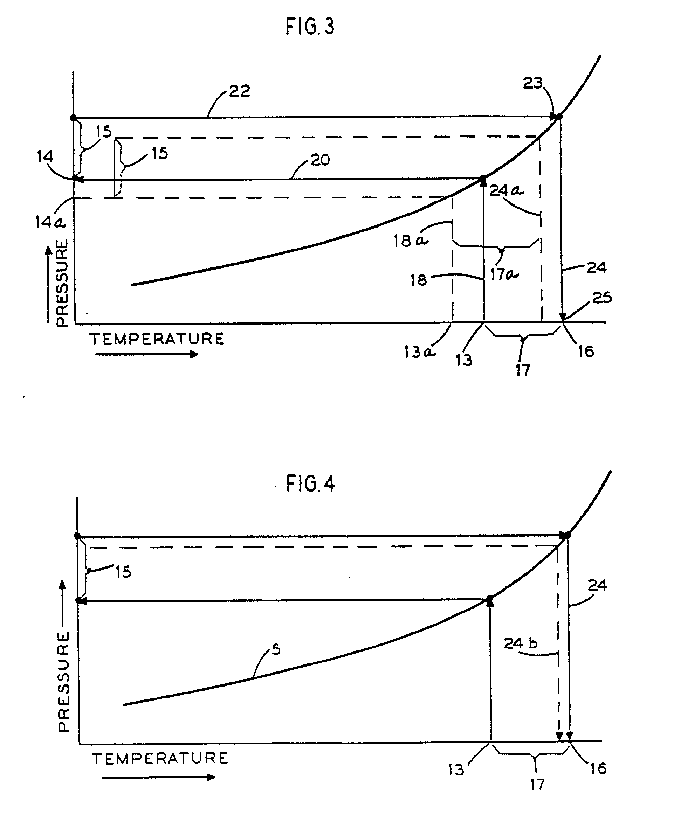

With reference to Figure 3, it will now be explained why the effect of inaccuracies in the temperature measurement is largely excluded by the method just described with reference to Figure 2. If the measured temperature value 13 is specified too low, as a measured temperature value 13a, because of an inaccurate measurement device, the associated saturation pressure 14a derived from this will also turn out to be too low. However, since the pressure difference 15 is a constant figure, i.e. it does not depend in any manner on the measured temperature 13a, the derivation of the saturation temperature 16 from the sum of the saturation pressure 14a and the pressure difference 15 produces only a negligibly small change in the temperature difference 17, which results from the non-linear shape of the saturation curve. The temperature difference 17a defined by lines 18a and 24a is therefore substantially equal to the temperature difference 17 defined by the lines 18 and 24.

The effect from the pressure difference value 15 shown in Figure 4 remains as the only noteworthy inaccuracy. The pressure difference value extends over a substantially smaller range than the liquid pressure. Consequently, the bandwidth of the measurement devices necessary for this is adapted to the particular range. The inaccuracy is therefore substantially smaller for the pressure difference value 15 than that for the liquid pressure as illustrated in Figure 1.

The distance between the line 24 and a line 24b illustrated in Figure 4 symbolises this inaccuracy, which is smaller than the error dimension or distance "a" of Figure 1 also resulting from the pressure measurement. In practice, the inaccuracy from Figure 4 is only approximately 5% of the inaccuracy of Figure 1.

It has therefore been possible with the method described with reference to Figure 2 to determine the temperature difference from the saturation temperature substantially more precisely. The inaccuracy due to the temperature measurement has been excluded and the inaccuracy due to the pressure measurement has been reduced by a factor of 20. The temperature difference value 17 of Figure 4 can thus be used as a reliable parameter for monitoring a system in which liquids circulate at high temperature and high pressure.

**Claim**

A method of determining the difference between the temperature of a heated, pressurised liquid flowing in a closed system and its saturation temperature, the method being characterised by:

measuring the temperature (13) of the liquid;

determining in a manner known *per se* the saturation pressure (14) associated with the measured temperature (13);

adding to the saturation pressure (14) the value of the pressure difference (15) between the saturation pressure (14) and the actual pressure, the pressure difference (15) being determined by known means, to determine the actual pressure;

determining the saturation temperature (16) for the liquid corresponding to the actual pressure in a manner known *per se*; and

subtracting the measured temperature (13) from the determined saturation temperature (16) to obtain the difference between the actual temperature of the liquid and its saturation temperature.

**Revendication**

1. Un procédé de détermination de la différence entre la température d'un liquide sous pression chauffé s'écoulant dans un réseau fermé et sa température de saturation, le procédé étant caractérisé en ce que:

on mesure la température (13) du liquide;

on détermine de manière connue en soi la pression de saturation (14) associée à la température mesurée (13);

on ajoute à la pression de saturation (14) la valeur de la différence de pression (15) entre la pression de saturation (14) et la pression réelle, la différence de pression (15) étant déterminée par des moyens connus, pour déterminer la pression réelle;

on détermine de manière connue en soi la température de saturation (16) du liquide correspondant à la pression réelle; et

on soustrait la température mesurée (13) de la température de saturation déterminée (16) pour obtenir la différence entre la température réelle du liquide et sa température de saturation.

**Patentanspruch**

Verfahren zur Ermittlung des Abstandes zwischen der Temperatur einer in einem geschlossenen System strömenden erhitzten, unter Druck stehenden Flüssigkeit und ihrer Sättigungstemperatur, gekennzeichnet durch

Messen der Temperatur (13) der Flüssigkeit,

Bestimmung des mit der gemessenen Temperatur (13) verbundenen Sättigungsdruckes (14) in an sich bekannter Weise,

Addition des Wertes des Druckunterschiedes (15) zwischen dem Sättigungsdruck (14) und dem tatsächlichen Druck zu dem Sättigungsdruck (14), wobei der Druckunterschied (15) mit bekannten Mitteln bestimmt wird, um den tatsächlichen Druck zu ermitteln,

Bestimmung der Sättigungstemperatur (16) für die Flüssigkeit entsprechend dem tatsächlichen Druck in an sich bekannter Weise und

Subtrahieren der gemessenen Temperatur (13) von der ermittelten Sättigungstemperatur (16), um den Abstand zwischen der tatsächlichen Temperatur der Flüssigkeit und ihrer Sättigungstemperatur zu bekommen.

FIG.1

FIG.2

FIG. 3

FIG. 4